(19) Europäisches Patentamt
European Patent Office
Office européen des brevets

(11) EP 0 487 280 B1

(12) EUROPEAN PATENT SPECIFICATION

(45) Date of publication and mention
of the grant of the patent:
**29.04.1998 Bulletin 1998/18**

(51) Int Cl.6: **G08G 1/0968**, G01C 21/20

(21) Application number: **91310606.8**

(22) Date of filing: **18.11.1991**

(54) **Method and apparatus for displaying road conditions**

Verfahren und Vorrichtung zur Anzeige des Strassenzustandes

Méthode et appareil pour l'affichage des conditions routières

(84) Designated Contracting States:
**DE FR GB**

(30) Priority: **20.11.1990 JP 312788/90**

(43) Date of publication of application:
**27.05.1992 Bulletin 1992/22**

(73) Proprietor: **FUJITSU TEN LIMITED**
**Kobe-shi, Hyogo (JP)**

(72) Inventors:
• **Nakatani, Yasuhiro**
  **Kobe-shi, Hyogo (JP)**
• **Ichimura, Atsushi**
  **Kobe-shi, Hyogo (JP)**
• **Tanaka, Toshio**
  **Kobe-shi, Hyogo (JP)**

• **Takeuchi, Hiroshi**
  **Nishinomiya-shi, Hyogo (JP)**
• **Okano, Yoichi**
  **Kobe-shi, Hyogo (JP)**

(74) Representative: **Skone James, Robert Edmund**
**GILL JENNINGS & EVERY**
**Broadgate House**
**7 Eldon Street**
**London EC2M 7LH (GB)**

(56) References cited:
WO-A-88/04029        DE-A- 3 322 195
FR-A- 2 628 243       US-A- 4 937 570

• **PATENT ABSTRACTS OF JAPAN vol. 12, no. 499 (P-807)27 December 1988**

## Description

Conventionally, automotive navigation systems have been available for showing the driver a position of a vehicle on a road map. Such navigation systems enable the driver to confirm the location of the vehicle.

For vehicular drivers, the radius of curves, configuration of intersections and related information concerning configuration of the road is important. Particularly, information concerning the configuration of the road is important for driving in the dark. Such information may be obtained through navigation systems. However, on the other hand, it is impractical and even dangerous to frequently observe the display screen of a navigation system for checking the road condition while driving. Therefore, it is desired to provide information of the road condition appropriately and safely. However, the navigation systems now available, are not satisfactory for safely providing the necessary information, such as road configuration.

Therefore, it is an object of the present invention to improve the drawbacks in the prior art and provide useful guidance to a vehicular driver in a safe and appropriate manner.

Another object of the present invention is to provide a method and an apparatus that can effectively provide information for a vehicular driver concerning configuration of a road, such as the radius of a forthcoming curve, configuration of a forthcoming intersection and so forth.

US-A-4937570 describes a route guidance display device for an automotive vehicle capable of displaying route patterns with a three-dimensional effect to enhance the viewer's comprehension of the road route situation being encountered.

GB-A-2142143 describes a travel direction display in which an approaching intersection is displayed using a star structure. Those roads forming a recommended route are represented in a different manner from the others.

According to one aspect of the invention there is provided, an apparatus for providing guidance concerning road condition, comprising: means for detecting a unit travelling link among a plurality of unit links in a road information, on which a vehicle is travelling; and means for detecting an instantaneous position of the vehicle and a travelling direction of said vehicle; characterised in that the apparatus further comprises means for calculating a distance from the instantaneous vehicle position to a forthcoming end of said unit travelling link on the basis of said instantaneous vehicle position and said travelling direction; means for detecting number of intersecting unit links connected to the forthcoming end of said unit travelling link; means for calculating an intersecting angle $\theta_1$ at said forthcoming end of the said unit travelling link with intersecting unit links; means for calculating a curvature at the end of said unit travelling link on the basis of the intersecting angle $\theta_1$ and the length $l_1$ of the next unit link connected to the end of the unit travelling link; and means for displaying information concerning the curvature at the intersection of said links.

Preferably the apparatus further comprises means for displaying information concerning intersecting condition of said unit link and said intersecting unit links at the intersection thereof.

According to a further aspect of the invention there is provided a method for providing guidance concerning road condition, comprising the steps of: detecting a unit travelling link among a plurality of unit links in a road information, on which a vehicle is travelling; and detecting an instantaneous position of the vehicle and a travelling direction of said vehicle; characterised in that the method further comprises the steps of:

calculating a distance from the instantaneous vehicle position to a forthcoming end of said unit link on the basis of said instantaneous vehicle position and said travelling direction;

detecting number of intersecting unit links connected to the forthcoming end of said unit link;

calculating intersecting angle $\theta_1$ at said forthcoming end of the said unit link with said intersecting unit links when said number of said intersecting unit links is one; calculating a curvature at the end of said unit travelling link on the basis of the intersecting angle $\theta_1$ and the length $l_1$ of the next unit link connected to the end of the unit travelling link; and displaying information concerning the curvature at the intersection of said links.

Preferably the method further comprises the step of displaying information indicative of forthcoming intersection accompanying information concerning intersecting condition of said unit link and said intersecting unit links at the intersection thereof, when the number of said intersecting unit links is a plural.

Preferably the apparatus comprises means for detecting one of the unit travelling links comprising a link train in a road information, on which a vehicle is travelling;

means for detecting instantaneous position of the vehicle and a travelling direction of said vehicle on said unit link in said link train;

means for determining an end position of the last unit link of said link train;

means for determining an end position of the last unit link of said link train positioned at a predetermined distance $\gamma$ ahead of said instantaneous position of the vehicle;

means for detecting and calculating at least a number of intersecting unit links connected, an intersecting angle formed, and a curvature of at least one of said unit links connected, an end of each one of said unit links of said travelling link train;

means for displaying at least one of said information concerning at least one of the number of intersecting unit links connected, an intersecting angle formed between said unit link and adjacent unit link connected, and a curvature of an unit link connected to each one of the ends of said unit links in said link train, respectively, in an order in which each one of said unit links are arranged from said instantaneous position of the vehicle to said position of said predetermined distance $\gamma$ ahead of said instantaneous position thereof.

According to the present invention, by utilizing a conventional navigation system, a calculating operation is carried out on the basis of information comprising an instantaneous position of a vehicle on a road, information of a map or the like, a current speed thereof and a moving direction thereof, to provide to a driver prospective information concerning the road condition, i.e., configuration of the curve or intersection, which may significantly contribute to the maintenance of a high level of safety during a drive through a winding road, mountainous road and other roads providing poor visibility, for example, driving at night. Furthermore, since the present invention provides information concerning the presence of the curve or intersection but also the configuration of the curve or the intersection, it allows the driver to adjust his driving behaviour, including the vehicle speed, to the forthcoming curve or intersection.

The practical embodiment of the method and apparatus for guidance of a road condition, according to the present invention, will be discussed herebelow with reference to the accompanying drawings, in which:-

Figure 1 illustrates schematically the principle behind one embodiment of the invention;
Figure 2 illustrates examples of graphic signs which can be displayed indicating the magnitude of forthcoming curve angles;
Figure 3 illustrates examples of graphic signs showing different types of forthcoming intersection;
Figure 4 is a block diagram of one embodiment of the apparatus;
Figure 5 is a flow diagram illustrating operation of one embodiment of the method;
Figure 6 illustrates schematically the principle behind a second embodiment of the invention; and,
Figure 7 is a flow diagram illustrating the steps of a second embodiment of the method.

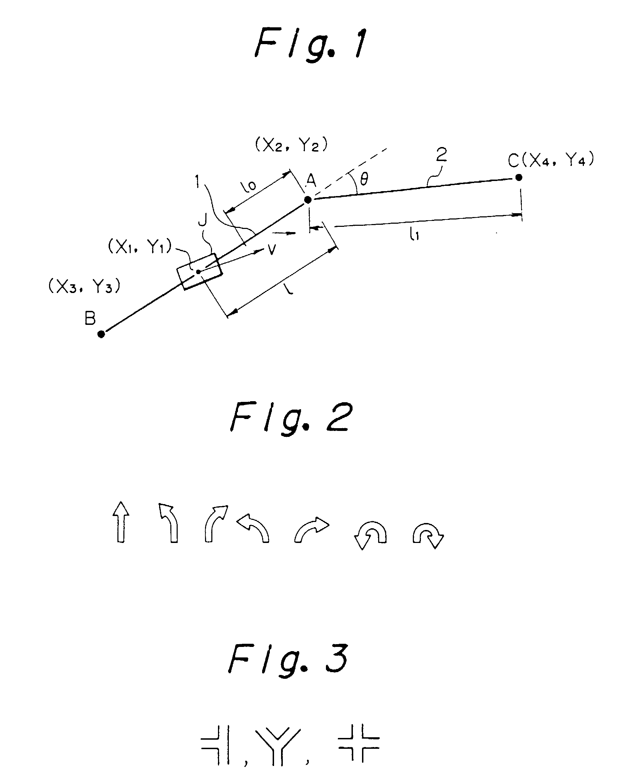

Referring now to Fig. 1, there is illustrated a principle of the method and apparatus for guidance of the road condition according to one aspect of the invention. Basically, the present invention is formulated to detect an instantaneous position of a vehicle J by a vehicle position detecting means on unit links 1 and 2 of road information. In case of the shown state, the vehicle J is detected on the unit link 1. Also, it is detected that the vehicle J is traveling on the unit link 1 toward the unit link 2 by means of a traveling information detecting means.

As such vehicle position detecting means, navigation systems known in the art can be utilized. The detected instantaneous position of the vehicle J can be expressed by X, Y coordinate values on a X-Y coordinate system. Also, the traveling direction of the vehicle is derived on the basis of a traveling direction vector V from a traveling speed and a traveling direction detected by a speed sensor and a direction sensor.

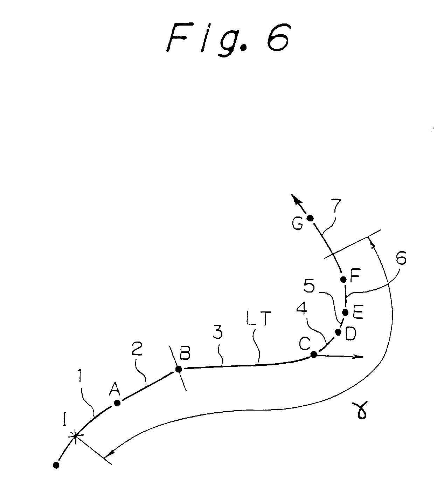

In the present invention, all of the road information used in the navigation system is stored in a suitable memory such that each of the roads on which a vehicle is traveling, comprises a plurality of unit links serially connected to each other to form a link train and each one of the unit links has a configuration selected from a linear configuration and a curvature configuration as shown in Fig. 6.

Each end of the unit link forms a connecting point to which another adjacent unit link or plurality of the unit links having the same or different configurations as that of the unit link are connected.

Calculation of the instantaneous vehicle traveling direction is performed by comparing inner products of the vector $\vec{V} \cdot \overrightarrow{AB}$ and the vector $\vec{V} \cdot \overrightarrow{BA}$. On the other hand, the instantaneous traveling speed of the vehicle can be detected by means of a distance sensor and so forth using a vehicle speed pulse.

In the shown example, judgement can be made that the vehicle is traveling on the unit link 1 from the end B to the end A through the process set forth above.

Means for calculating a distance $\ell$ from the instantaneous vehicle position $(X_1, Y_1)$ on the unit link 1 to the end A thereof, is provided.

Here, the position $(X_2, Y_2)$ of the end A of the link 1 can be read out from the road database stored in the known navigation system.

Then, the distance $\ell$ is compared with a predetermined distance $\ell_0$ for deriving a difference therebetween. When the distance $\ell$ is greater than the predetermined distance $\ell_0$, it is determined that the instantaneous position of the vehicle is not close enough to display the condition of the road at the end A of the link 1, where the intersection or the curve exists. When said judgement is made, no information will be displayed on a display means. Note that the distance $\ell_0$ represents a distance at which a determination should be carried out whereby whether or not such information should be displayed.

On the other hand, when the distance $\ell$ is shorter than the predetermined distance $\ell_0$, it is determined that the instantaneous position of the vehicle is close enough to the next intersection or curve at the end A of the link A. When said judgement is made, information will be displayed on a display means.

There is no specific distance to set as the predetermined distance $\ell_0$ and can be set at any desired distance. For example, it can be set at 20 m ahead of the end A. In the alternative, the predetermined distance $\ell_0$ can be set as a variable value associated with the instantaneous traveling speed of the vehicle. In the latter case, the predetermined distance $\ell_0$ may be set long enough for stopping the vehicle corresponding to the instantaneous vehicle speed. For example, when the vehicle speed is 100 km/h, the predetermined distance $\ell_0$ may be set automatically at 100 m.

Next, in the present invention, a unit link end condition recognizing means is provided for detecting the end A of the link 1, to which the vehicle is approaching. The unit link end conditioning recognizing means detects the configuration of the forthcoming curve or intersection and thus detects the number of unit links connected to the end A of the link 1. The detection of the forthcoming end A of the link can be made using data of the road map stored in the known navigation system.

When the single unit link is connected to the end A of the unit link 1, the unit link end condition recognizing means determines that there is only a curve at the forthcoming end A of the unit link 1. A difference of directions of the unit link 1 and the unit link 2 connected to the end A and the intersecting angle therebetween are calculated by an arithmetic means. Based on the intersecting angle of the unit links 1 and 2, a curvature of the forthcoming curve can be predicted.

Based on the results of the above-mentioned arithmetic operation, discrimination is made whether the forthcoming curve is a left curve or a right curve, and whether the curve is tight or not. Then, according to the result of discrimination, the configuration of the curve is displayed.

The curvature r1 of the present invention can be calculated utilizing the following equation (1);

$$\text{radius of Curvature } r1 = k \cdot \frac{l_1}{|\theta_1|} \qquad (1)$$

wherein k denotes a constant value and $l_1$ denotes a length of the unit link 2 connected to the end of the first unit link 1 and further $\theta_1$ denotes an intersecting angle formed between the first unit link 1 and the second unit link 2 as shown in Fig. 1.

Upon derivation of the difference of direction and the intersecting angle at the end A of the unit link 1, data of the road map recorded in the navigation system can be used. Namely, the directions of the unit links 1 and 2 can be derived from the coordinate positions of A and B at the ends of the unit link 1 and at the end C of the unit link 2.

Providing information concerning the forthcoming end of the unit link can be made in various ways. For example, it can be voice information for giving notice of the forthcoming intersection or curve audibly. As an alternative, the notice can be given by a graphic display of the forthcoming intersection or the curve.

In a practical embodiment of the graphic display, curves are divided into a plurality of classes depending upon the curvature, curve direction and radius of the curve. With respect to each of the classes of the curves, mutually distinct graphic signs are given as shown in Fig. 2. Such graphic signs are stored in a table. The table is accessed in terms of the information of the magnitude of the curve angle and the sign thereof for reading out the corresponding graphic sign and for displaying the relevant graphic image on a visual display screen, such as a CRT.

From the display, the driver can obtain information such as "the forthcoming curve is a right hand curve and the curve is tight", or "the forthcoming curve is a left hand curve and the curvature is small, i.e., curve is not tight".

In addition, according to the invention, for the graphic display of the configuration of the forthcoming curve or intersection as shown in Figs. 2 and 3, audible information and color display technology can be combined for enhancing the information provided for the driver. For example, by changing the color of the display depending upon the tightness of the curve in the graphic images of Fig. 2, information concerning the road condition can be provided more effectively and accurately.

In addition, with the present invention, it is also possible to provide an alarm for overspeeding prior to entering the curve. For enabling this, an optimal or an acceptable maximum vehicular traveling speed can be set with respect to the degree of the curvature, through which the vehicle can pass smoothly and safely. Then, by comparing the instantaneous vehicular traveling speed with the optimal or the allowable maximum speed, the degree of danger can be recognized. Based on the recognized degree of danger at the forthcoming curve, an alarm can be provided requiring deceleration of the vehicle. For example, when the vehicle traveling speed is too high relative to the radius of the forthcoming curve, the display color can change to red for alerting the driver of overspeeding upon entry into the forthcoming curve. Also, in such a case, it is also possible to actuate a voice generating device for providing an audible signal, such as "slow down".

On the other hand, when a plurality of unit links are connected to the end A of the unit link 1, the unit link end condition recognizing means will determine that there is a forthcoming intersection to display the configuration of the intersection as shown in Fig. 3. It is also possible to combine the visual display showing the configuration of the intersection as shown in Fig. 3, with an audible information, such as "there is a forthcoming junction", "there is a forthcoming intersection", "intersection is approaching", "be careful and so forth.

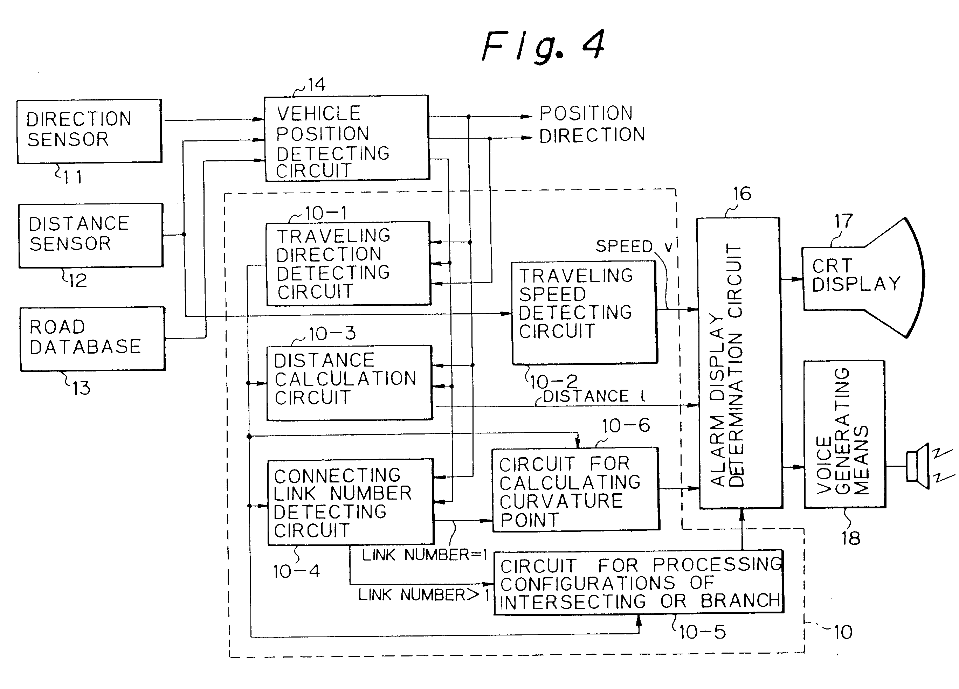

Fig. 4 shows the preferred construction of the apparatus for offering guidance of the road condition according to the present invention.

The apparatus includes a direction sensor 11 for detecting the instantaneous vehicular traveling direction and a distance sensor 12 for detecting vehicular traveling distance using the rotation pulse of a road wheel and a road database 13 in which the road information data are stored as the same database utilized in the conventional navigation system.

And the apparatus further includes a vehicle position detecting circuit 14 connected to outputs of each one of the direction sensor 11, the distance sensor 12 and the road database 13, respectively and outputting the positional information and the directional information, a process data generating circuit 10 and an alarm generating and discriminating circuit 16.

In the present invention, the process data generating circuit 10 of this apparatus comprises a traveling direction detecting circuit 10-1 for detecting traveling direction of the vehicle and connected to the output of the vehicle position detecting circuit 14, a traveling speed detecting circuit 10-2 for detecting the traveling speed of the vehicle and connected to the output of the distance sensor 12, a distance calculation circuit 10-3 for calculating a distance from the instantaneous vehicle position to the end of the unit link and connected to the output of the traveling direction detecting circuit 10-1 and the outputs of the vehicle position detecting circuit 14, a circuit 10-4 for detecting the number of unit links connected to the forthcoming end of the unit link and connected to the output of the traveling direction detecting circuit 10-1 and the output of the vehicle position detecting circuit 14, a circuit 10-5 for detecting and processing a configuration of the intersecting or the branch point including an intersection angle θ between the traveling unit link and the unit links connected to the forthcoming end and connected to the output of the output of the traveling direction detecting circuit 10-1 and the output of the circuit 10-4 and a circuit 10-6 for calculating a curvature of the adjacent unit link connected to the end of the unit link and connected to the output of the traveling direction detecting circuit 10-1 and the output of the circuit 10-4.

The alarm generating and discriminating circuit 16 of the present invention receives information from the output of the traveling speed detecting circuit 10-2, the distance calculation circuit 10-3, the circuit 10-4 and the circuit 10-5, respectively and the output thereof is connected to CRT display 17 and a voice generating means 18.

In the alarm generating and discriminating circuit 16, a suitable arithmetic circuit (not shown) is provided and it may perform a predetermined process, such as recognition, judgement or comparative calculation for deriving information to be provided for the driver.

In the present invention, the predetermined distance $1_0$ by which whether or not the road information of the end of the unit link on which the vehicle is traveling is determined and displayed with respect to the distance 1 between the instantaneous position of the vehicle and the end position of the unit link, can be obtained by following manner, for example;

When assuming the vehicle speed obtained from the traveling speed detecting circuit is v(m/sec) and the display is intended to be carried out at a time 30 seconds before the vehicle reaches the end position of the unit link, then the calculation is carried out with the following equation;

$$l_0 = v \times 30 \text{ (m)}$$

When the road to be traveled is crowded with vehicles (v ≒ 0) and since $1_0$ ≒ 0 is an inadequate condition then the following equation is preferably used;

$$l_0 = \max (v \times 30, 30)$$

Note, that any one of v × 30 m or 30 m, which ever is larger is utilized.

On the other hand, a discriminating method for determining whether the alarm display is required or not, on the basis of the curvature r1 of a forthcoming curve of the road and the present moving speed v of the vehicle, can be obtained, for example, as follows;

A dangerous ratio of the vehicle can be obtained by the equation $v^2/r1$ and when the dangerous ratio $v^2/r1$ > K, wherein K is constant, the alarm is displayed while when the dangerous ratio $v^2/r1$ < K, the alarm is not displayed.

The results of the arithmetic operations in the arithmetic circuit may be displayed on a CRT display 17 and audibly provided from a voice generating means 18, through an alarm circuit 16. Therefore, the driver can realize the forthcoming intersection or curve with the configuration thereof, in advance.

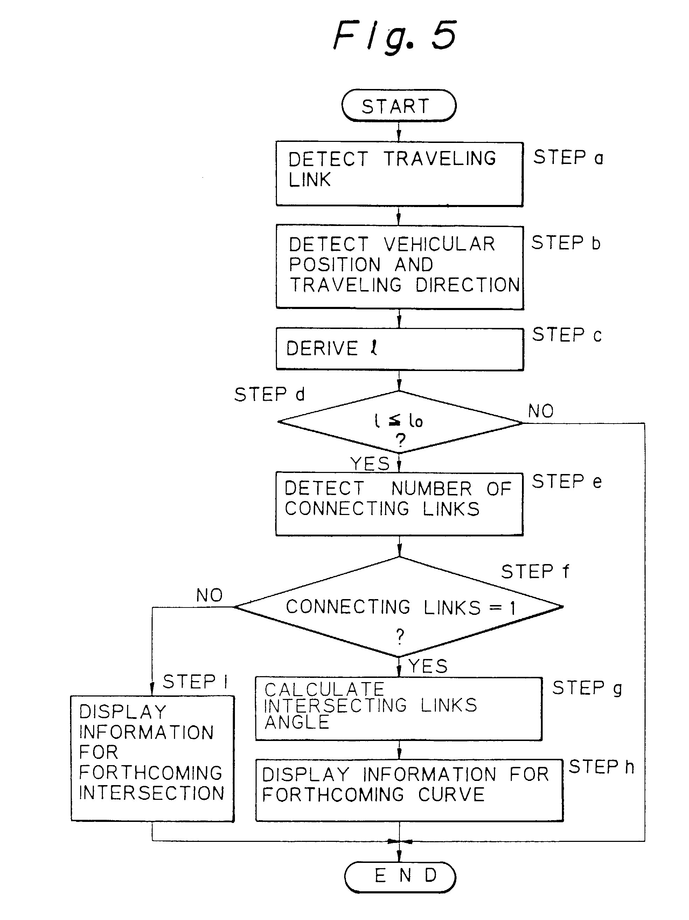

Fig. 5 is a flowchart showing a practical process for providing guidance for the driver concerning the road condition, according to the present invention.

At first, immediately after starting the process, one of the unit links in the road information, on which the vehicle is traveling is detected at a step a. Subsequently, at a step b, in the manner set forth above, the instantaneous vehicle position on the unit link and the traveling direction along the unit link is detected. Then, from the information of the instantaneous vehicle position and the traveling direction, the distance $\ell$ from the instantaneous vehicle position to the forthcoming end of the unit link is arithmetically derived, at a step c. Thereafter, the distance $\ell$ obtained in the process at the step c is compared with the predetermined distance $\ell_0$ to determine whether the information is to be displayed or not in view of the vehicle position relative to the forthcoming end of the unit link, at a step d. when the distance $\ell$ is greater than the predetermined distance $\ell_0$ as checked at the step d, the process goes directly to END since it can be determined that the vehicle is too far from the end of a unit link to display the information. On the other hand, when the distance $\ell$ is smaller than or equal to the predetermined distance $\ell_0$, it is determined that display of the information is necessary. Then, the process advances to a step e. At the step e, the number of unit links connected to the end of the traveling unit link, in which the vehicle is traveling, is detected.

Then, a check is made to determine whether a single unit link is connected or not, so as to discriminate the type of the end of the traveling unit link, either a curve or intersection, at a step f. When the number of connected unit links is one, the intersecting angle of the unit links is calculated at a step g. Subsequently, at a step h, information concerning the presence of the curve and the curvature thereof is displayed as a signal of caution for the driver. As an option, it is possible to provide an alarm for the driver for overspeeding in view of the curvature of the forthcoming curve and the instantaneous traveling speed.

On the other hand, when a plurality of unit links connected to the traveling unit link are detected at the step f, it can be determined that the forthcoming end of the unit link is the intersection. Then, at a step i, the information concerning the presence of the intersection as well as the configuration of the forthcoming intersection is displaced.

In the embodiments as explained above, only the road information concerning the condition at the end of a unit link on which the vehicle is traveling, is processed and displayed, but in the present invention total road information generated from a plurality of individual units of information from each one of the unit links serially connected to each other forming a link train on which the vehicle is traveling, by processing them in a suitable data processing circuit, can be used. Such an aspect of the present invention will be explained hereunder.

In accordance with this, there is provided an apparatus for offering guidance concerning road condition, comprising a means for detecting one of the unit traveling links comprising a link train in a road information on which a vehicle is traveling; a means for detecting an instantaneous position of the vehicle and traveling direction of the vehicle on the unit link in the link train means for determining an end position of the last unit link of the link train positioned at a predetermined distance $\gamma$ ahead of the instantaneous position of the vehicle; a means for detecting and calculating at least number of intersecting unit links connected, an intersecting angle formed, and a curvature of at least one of the unit links connected to an end of each one of the unit links of the traveling link train; a means for displaying at least one of the information units concerning at least one of the number of intersecting unit links connected, an intersecting angle formed between the unit link and adjacent unit link connected, and a curvature of an unit link connected to each one of the ends of the unit links in the link train, respectively, in an order in which each one of the unit links are arranged from the instantaneous position I of the vehicle to the position of the predetermined distance $\gamma$ ahead of the instantaneous position thereof.

In this respect a plurality of information about the road condition at each one of the end point of respective unit links serially connected to form a link train as shown in Fig. 6, are taken in a group to be processed and thereby provide more detailed and suitable road information to the driver at a suitable time.

Note, that the Fig. 6 shows one example of a road condition on which the vehicle will pass through hereafter, in which a plurality of the unit links 1 to 7 are serially connected to form one link train LT, and the road conditions at each one of the end positions (A to F) of respective unit links 1 to 6 are simultaneously stored in a suitable data processing means.

And in this situation, when the instantaneous position of the vehicle exists at point I on the link train LT, a position of a predetermined discriminating point P existing at a predetermined distance $\gamma$ ahead of the instantaneous position I of the vehicle, and then a plurality of conditions about each one of the end positions (A to F) of respective unit links that falls into the range of the link train LT between the instantaneous position I of the vehicle and the position the predetermined distance $\gamma$ ahead of the instantaneous position I thereof, are obtained.

The predetermined distance $\gamma$ is not restricted to a special critical figure but it may be desirably determined with respect to a road condition, accuracy of the information to be obtained from the system and the road information already stored in the memory or the like.

Note, that in this aspect of the present invention, the length 1 of each one of the unit links is relatively shorter than that of the predetermined distance 1 l and each unit of information concerning the road condition of the end portion is sequentially displayed in the order at which they are arranged.

Namely, the information concerning the road condition at the end portion A of the first unit link 1 is first displayed closest to the end portion of the instantaneous position I of the vehicle and is the same at the end portion B of the second unit link 2 next closest end portion thereto, is displayed thereafter and so on.

In this aspect, the curvature can be calculated utilizing the following equation (2) with respect to the link train LT;

$$\text{radius of Curvature } r1 = k \cdot \frac{L_A}{|\theta_A|} \qquad (1_2)$$

wherein k denotes a constant value and $L_A$ denotes a total length of each one of the unit link $1_i$, i.e., $L_A = \Sigma 1_i$ and $\theta_A$ denotes a total intersection angle of each one of the intersecting angle $\theta_i$, i.e., $\theta_A = \Sigma \theta_i$.

In this respect, the link train is defined as follows;

(1) The link train comprises a plurality of unit links i each connected to one end of a previous unit link locating the vehicle moving direction;

(2) In the link train, reference of the intersecting angle formed by the adjacent two unit links is never changed, (the reference representing a clockwise curve, i.e., negative curve or counter-clockwise curve, i.e., positive curve); and

(3) An absolute value of the intersecting angle of the unit links formed at each end thereof necessarily exceeds a predetermined value $\theta_0$.

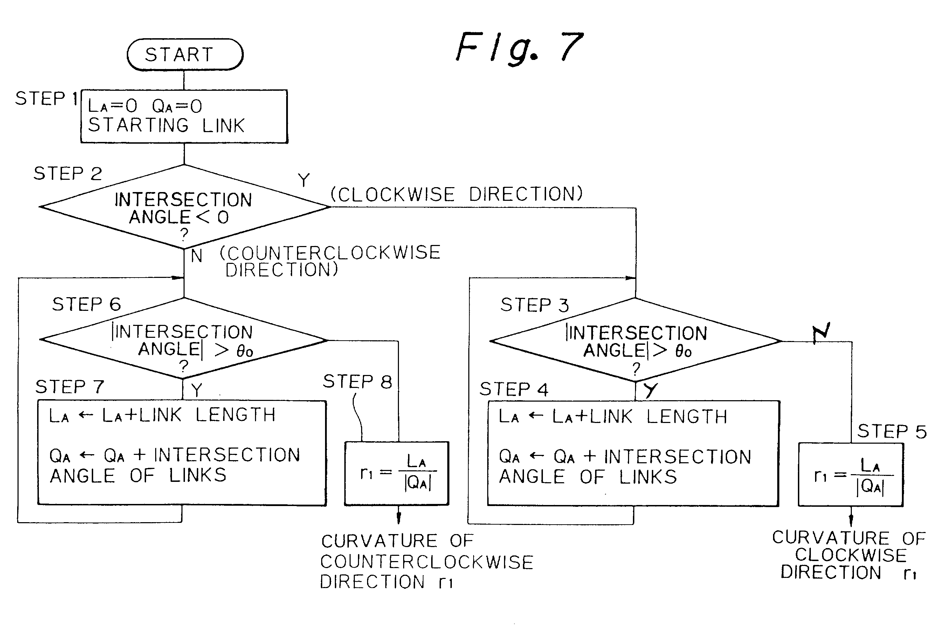

The discriminating process to determine the curvature will be explained with reference to the Fig. 7, hereunder.

Fig. 7 shows a flow chart for processing the curvature in the present invention, and when the system is started, all data stored in a memory are initialized. (step 1)

In step 2, an intersecting angle formed between the unit links is calculated and if the detected intersecting angle exceeds 0, i.e., and reads YES, then the process advances to step 3 and determines whether the absolute intersecting angle exceeds $\theta_0$ or not.

If the absolute intersecting angle exceeds $\theta_0$ and reads YES at the step 3, then the process advances to step 4 and the total unit links $L_A$ is changed to $L_A$ + the length of a new unit link connected to the end of the unit link and the total intersecting angle $\theta_A$ is changed to $\theta_A$ + the intersecting angle newly detected and then the process returns to the step 3 and detects the same information of the next unit link and repeats the same operation.

On the other hand, if the absolute intersecting angle shows below $\theta_0$ and NO at the step 3, then the process advances to step 5 and a curvature in a counterclockwise direction r1 is calculated in accordance with the equation (1) as shown above.

In the step 2, if the detected intersecting angle does not exceed 0, i.e., NO, then the process advances to step 6 and determines whether the absolute intersecting angle exceeds $\theta_0$ or not.

If the absolute intersecting angle exceeds $\theta_0$ and reads YES at the step 6, then the process advances to step 7 and the total unit links $L_A$ is changed to $L_A$ + the length of a new unit link connected to the end of the unit link and the total intersecting angle $\theta_A$ is changed to $\theta_A$ + the intersecting angle newly detected and then the process returns to the step 6 and detects the same information of the next unit link and repeats the same operation.

On the other hand, if the absolute intersecting angle shows below $\theta_0$ and reads NO at the step 6, then the process advances to step 8 and a curvature in a clockwise direction r1 is calculated in accordance with the equation (1) as shown above.

As set forth above, the present invention can fulfill all of the objects and advantages sought therefor. Particularly, since the present invention can provide prospective information concerning the road condition, i.e., configuration of the curve or intersection, it may significantly contribute to the maintenance of a high level of safety during a drive through a winding road, mountainous road and other roads providing poor visibility for the driver. Furthermore, since the present invention provides information concerning the presence of the curve or intersection and also the configuration of the curve or the intersection, it may allow the driver to adjust his driving behavior, including the vehicle speed, to the forthcoming curve or intersection.

## Claims

1. An apparatus for providing guidance concerning road condition, comprising: means for detecting a unit travelling link among a plurality of unit links in a road information (13), on which a vehicle is travelling; and means (14,10-1) for detecting an instantaneous position of the vehicle and a travelling direction of said vehicle; characterised in that the apparatus further comprises means (10-3) for calculating a distance from the instantaneous vehicle position to a forthcoming end of said unit travelling link on the basis of said instantaneous vehicle position and said travelling direction; means (10-4) for detecting a number of intersecting unit links connected to the forthcoming end of said unit travelling link; means (16) for calculating an intersecting angle $\theta_1$ at said forthcoming end of the said unit travelling link with said intersecting unit link when said number of said intersecting unit links is one; means for calculating a curvature at the end of said unit travelling link on the basis of the intersecting angle $\theta_1$ and the length $l_1$ of the next unit link connected to the end of the unit travelling link; and means (17) for displaying information concerning the curvature at the intersection of said link.

2. Apparatus according to claim 1, wherein the means for calculating the curvature calculates the curvature utilizing the equation

$$\text{radius of curvature } r1 = k \cdot \frac{l_1}{|\theta_1|}$$

where k denotes a constant value.

3. Apparatus according to claim 1, wherein the information providing means comprises means (16) for displaying information concerning intersecting condition of said unit travelling link and the intersecting links at the intersection thereof.

4. An apparatus according to any of the preceding claims, wherein the information is displayed as a graphic pattern representing the condition of the intersection.

5. Apparatus according to any of the preceding claims, further comprising means for discriminating a degree of danger on the basis of the information concerning the instantaneous travelling speed of the vehicle and the intersecting angle for providing an alarm for a driver.

6. Apparatus according to claim 5, wherein the means for providing an alarm generates an alarm in the form of a graphic alarming display and/or an audible alarm.

7. Apparatus according to any of the preceding claims, wherein a unit travelling link train is defined by a plurality of unit links serially connected to one end of a previous unit link locating the vehicle moving direction; and wherein the means for calculating the curvature calculates the curvature utilizing the equation

$$\text{radius of curvature } r1 = k \cdot \frac{L_A}{|\theta_A|}$$

wherein k denotes a constant value, $L_A$ denotes a total length of each one of the unit links $L_i$, i.e. $L_A = \Sigma l_i$ and $\theta_A$ denotes a total intersection angle of each one of the intersecting angles $\theta_i$, i.e. $\theta_A = \Sigma \theta_i$.

8. Apparatus according to any of the preceding claims, wherein the unit travelling link is a link of a link train, the apparatus further comprising

means for detecting instantaneous position of the vehicle and a travelling direction of said vehicle on said unit link in said link train;
means for determining an end position of the last link unit of said link train positioned at a place a predetermined distance $\gamma$ ahead of said instantaneous position of the vehicle;
means for detecting and calculating at least a number of intersecting unit links connected, an intersecting angle formed, and a curvature of at least one of said unit links connected to an end of each one of said unit links of said travelling link train;
means for displaying at least one of said information concerning at least one of the number of intersecting unit links connected, an intersecting angle formed between said unit link and adjacent unit link connected, and a curvature of a unit link connected to each one of the ends of said unit links in said link train, respectively, in an order in which each one of said unit links are arranged from said instantaneous position of the vehicle to said position said predetermined distance ahead of said instantaneous position thereof.

9. Apparatus according to any of the preceding claims, wherein the information concerning the curvature comprises a stored graphic sign which is selected from a plurality of stored graphic signs in accordance with the calculated curvature and curve direction.

10. A method for providing guidance concerning road condition, comprising the steps of: detecting a unit travelling link among a plurality of unit links in a road information, on which a vehicle is travelling; and detecting an instantaneous position of the vehicle and a travelling direction of said vehicle; characterised in that the method further comprises the steps of:

calculating a distance from the instantaneous vehicle position to a forthcoming end of said unit link on the basis of said instantaneous vehicle position and said travelling direction;
detecting a number of intersecting unit links connected to the forthcoming end of said unit link;
calculating intersecting angle $\theta_1$ at said forthcoming end of the said unit link with said intersecting unit links when said number of said intersecting unit links is one; calculating a curvature at the end of said unit travelling link on the basis of the intersecting angle $\theta_1$ and the length $l_1$ of the next unit link connected to the end of the unit travelling link; and
displaying information concerning the curvature at the intersection of said links.

11. A method as set forth in claim 10, which further comprises a step of discriminating a degree of danger on the basis of the information concerning the instantaneous travelling speed of the vehicle and said intersecting angle for providing an alarm for a driver.

12. A method according to claim 10 or 11, further comprising the steps of:

detecting a number of intersecting links connected to the forthcoming end of said unit link when a distance from the instantaneous vehicle position to a forthcoming end of the unit travelling link on the basis of the instantaneous vehicle position and the travelling direction becomes below a predetermined distance $\ell_0$; and
displaying information indicative of forthcoming intersection accompanying information concerning intersecting condition of said link and said intersecting unit links at the intersection thereof, when the number of said intersecting unit links is plural.

13. A method according to any of claims 10 or 11, wherein the curvature is calculated utilizing the equation

$$\text{radius of curvature } r1 = k \cdot \frac{l_1}{|\theta_1|}$$

where k denotes a constant value.

14. A method according to any of claims 10 to 12 wherein a unit travelling link train is defined by a plurality of unit links i each connected to one end of a previous unit link locating the vehicle moving direction; and wherein the curvature is calculated utilizing the equation

$$\text{radius of curvature } r1 = k \cdot \frac{L_A}{|\theta_A|}$$

wherein k denotes a constant value, $L_A$ denotes a total length of each one of the unit links $L_i$, i.e. $L_A = \Sigma l_i$ and $\theta_A$ denotes a total intersection angle of each one of the intersecting angles $\theta_i$, i.e. $\theta_A = \Sigma \theta_i$.

15. A method according to any of claims 10 to 14, further comprising selecting a stored graphic sign from a plurality of previously stored signs in accordance with the calculated curvature and curve direction, and displaying the selected graphic sign.

**Patentansprüche**

1. Vorrichtung zur Bereitstellung einer Führung bezüglich einer Straßenbedingung, umfassend:
eine Einrichtung zum Erfassen einer Einheits-Fahrtverbindung von einer Vielzahl von Einheitsverbindungen in einer Straßeninformation (13), auf der ein Fahrzeug gerade fährt; und eine Einrichtung (14, 10-1) zum Erfassen der momentanen Position des Fahrzeugs und einer Fahrtrichtung des Fahrzeugs; dadurch gekennzeichnet, daß die Vorrichtung ferner umfaßt: eine Einrichtung (10-3) zum Berechnen eines Abstands von der momentanen Fahrzeugposition zu einem nächsten Ende der Einheits-Fahrtverbindung auf Grundlage der momentanen Fahrzeugposition und der Fahrtrichtung; eine Einrichtung (10-4) zum Erfassen einer Anzahl von überschneidenden Einheitsverbindungen, die mit dem nächsten Ende der Einheits-Fahrtverbindung verbunden sind; eine Einrichtung (16) zum Berechnen eines Schnittwinkels $\theta_1$ an dem nächsten Ende der Einheits-Fahrtverbindung mit den überschneidenden Einheitsverbindungen, wenn die Anzahl der überschneidenden Einheitsverbindungen Eins ist; eine Einrichtung zum Berechnen einer Krümmung an dem Ende der Einheits-Fahrtverbindung auf Grundlage des Schnittwinkels $\theta_1$ und der Länge $l_1$ der nächsten Einheitsverbindung, die mit dem Ende der Einheits-Fahrtverbindung verbunden ist; und eine Einrichtung (17) zum Anzeigen von Information bezüglich der Krümmung an der Überschneidung der Verbindung.

2. Vorrichtung nach Anspruch 1, **dadurch gekennzeichnet, daß** die Einrichtung zum Berechnen der Krümmung die Krümmung unter Verwendung der folgenden Gleichung berechnet:

$$\text{Krümmungsradius } r1 = k \cdot \frac{l_1}{|\theta_1|}$$

wobei k einen konstanten Wert bezeichnet.

3. Vorrichtung nach Anspruch 1, **dadurch gekennzeichnet, daß** die Informations-Bereitstellungseinrichtung eine Einrichtung (16) zum Anzeigen von Information bezüglich einer Schnittbedingung der Einheits-Fahrtverbindung und der überschneidenden Verbindungen an der Überschneidung davon umfaßt.

4. Vorrichtung nach einem der vorangehenden Ansprüche, **dadurch gekennzeichnet, daß** die Information als ein graphisches Muster angezeigt wird, das die Bedingung an der Überschneidung darstellt.

5. Vorrichtung nach einem der vorangehenden Ansprüche, **gekennzeichnet durch** eine Einrichtung zum Unterscheiden eines Gefahrengrads auf Grundlage der Information bezüglich der momentanen Fahrtgeschwindigkeit des Fahrzeugs und des Schnittwinkels zum Bereitstellen eines Alarms für einen Fahrer.

6. Vorrichtung nach Anspruch 5, **dadurch gekennzeichnet, daß** die Einrichtung zum Bereitstellen eines Alarms einen Alarm in der Form einer graphischen Alarmanzeige und/oder eines hörbaren Alarms erzeugt.

7. Vorrichtung nach einem der vorangehenden Ansprüche, **dadurch gekennzeichnet, daß** eine Einheits-Fahrtverbindungsfolge definiert wird durch eine Vielzahl von Einheitsverbindungen, die seriell mit einem Ende einer vorangehenden Einheitsverbindung verbunden sind, die die Fahrzeug-Bewegungsrichtung festlegt; und daß die Einrichtung zum Berechnen der Krümmung die Krümmung unter Verwendung der folgenden Gleichung berechnet:

$$\text{Krümmungsradius } r1 = k \cdot \frac{L_A}{|\theta_A|}$$

wobei k einen konstanten Wert bezeichnet, $L_A$ eine Gesamtlänge jeder der Einheitsverbindungen $L_i$ bezeichnet, d.h. $L_A = \Sigma l_i$ und $\theta_A$ einen Gesamtschnittwinkel an jeder der Schnittwinkel $\theta_i$ bezeichnet, d. h. $\theta_A = \Sigma \theta_i$.

8. Vorrichtung nach einem der vorangehenden Ansprüche, **dadurch gekennzeichnet, daß** die Einheits-Fahrtverbindung eine Verbindung einer Verbindungsfolge ist, wobei die Vorrichtung ferner umfaßt:

eine Einrichtung zum Erfassen einer momentanen Position des Fahrzeugs und einer Fahrtrichtung des Fahrzeugs auf der Einheitsverbindung in der Verbindungsfolge;

eine Einrichtung zum Bestimmen einer Endposition der letzten Verbindungseinheit der Verbindungsfolge, die an einer Stelle positioniert ist, die in einem vorgegebenen Abstand $\gamma$ vor der momentanen Position des Fahrzeugs ist;

eine Einrichtung zum Erfassen und Berechnen wenigstens einer Anzahl von überschneidenden verbundenen Einheitsverbindungen, eines gebildeten Schnittwinkels und einer Krümmung von wenigstens einer der Einheitsverbindungen, die mit einem Ende jeder der Einheitsverbindungen der Fahrtverbindungsfolge verbunden sind;

eine Einrichtung zum Anzeigen wenigstens der Information bezüglich wenigstens einer der Anzahl von verbundenen überschneidenden Einheitsverbindungen, und/oder eines zwischen der Einheitsverbindung und einer benachbarten verbundenen Einheitsverbindung gebildeten Winkels und/oder einer Krümmung einer Einheitsverbindung, die mit jeder der Enden der Einheitsverbindungen in der Verbindungsfolge verbunden ist, in einer Reihenfolge, in der jede der Einheitsverbindungen von der momentanen Position des Fahrzeugs zu der Position, die in dem vorgegebenen Abstand vor der momentanen Position davon angeordnet ist, angeordnet sind.

9. Vorrichtung nach irgendeinem der vorangehenden Ansprüche, **dadurch gekennzeichnet, daß** die Information betreffend der Krümmung ein gespeichertes graphisches Zeichen umfaßt, das aus einer Vielzahl von gespeicherten graphischen Zeichen gemäß der berechneten Krümmung und der Kurvenrichtung gewählt wird.

10. Verfahren zum Bereitstellen einer Führung bezüglich einer Straßenbedingung, umfassend die folgenden Schritte: Erfassen einer Einheits-Fahrtverbindung von einer Vielzahl von Einheitsverbindungen in einer Straßeninformation, auf der ein Fahrzeug gerade fährt; und Erfassen einer momentanen Position des Fahrzeugs und einer Fahrtrichtung des Fahrzeugs;
**dadurch gekennzeichnet, daß** das Verfahren ferner die folgenden Schritte umfaßt:

Berechnen eines Abstandes von der momentanen Fahrzeugposition zu einem nächsten Ende der Einheitsverbindung auf der Grundlage der momentanen Fahrzeugposition und der Fahrtrichtung;

Erfassen einer Anzahl von überschneidenden Einheitsverbindungen, die mit dem nächsten Ende der Einheitsverbindung verbunden sind;

Berechnen eines Schnittwinkels $\theta_1$ an dem nächsten Ende der besagten Einheitsverbindung mit den überschneidenden Einheitsverbindungen, wenn die Anzahl der überschneidenden Einheitsverbindungen Eins ist;

Berechnen einer Krümmung an dem Ende der Einheits-Fahrtverbindung auf Grundlage des Schnittwinkels $\theta_1$ und der Länge $l_1$ der nächsten Einheitsverbindung, die mit dem Ende der Einheits-Fahrtverbindung verbunden ist; und

Anzeigen von Information bezüglich der Krümmung an der Überschneidung der Verbindungen.

11. Verfahren nach Anspruch 10, ferner umfassend einen Schritt zum Unterscheiden eines Gefahrengrads auf Grundlage der Information bezüglich der momentanen Fahrtgeschwindigkeit des Fahrzeugs und des Schnittwinkels zum Bereitstellen eines Alarms für einen Fahrer.

12. Verfahren nach Anspruch 10 oder 11, ferner umfassend die folgenden Schritte:

Erfassen einer Anzahl von überschneidenden Verbindungen, die mit dem nächsten Ende der Einheitsverbindung verbunden sind, wenn ein Abstand von der momentanen Fahrzeugposition zu einem nächsten Ende der Einheits-Fahrtverbindung auf Grundlage der momentanen Fahrzeugposition und der Fahrtrichtung kleiner als ein vorgegebener Abstand $l_0$ wird; und

Anzeigen von Information, die eine eine nächste Überschneidung begleitende Information bezüglich einer Überschneidungsbedingung der Verbindung und der überschneidenden Einheitsverbindungen an der Überschneidung davon anzeigt, wenn die Anzahl der überschneidenden Einheitsverbindungen mehrere sind.

13. Verfahren nach einem der Ansprüche 10 oder 11, **dadurch gekennzeichnet, daß** die Krümmung unter Verwendung der folgenden Gleichung berechnet wird:

$$\text{Krümmungsradius } r1 = k \cdot \frac{l_1}{|\theta_1|}$$

wobei k einen konstanten Wert bezeichnet.

14. Verfahren nach einem der Ansprüche 10 bis 12, **dadurch gekennzeichnet, daß** eine Einheits-Fahrtverbindungsfolge definiert wird durch eine Vielzahl von Einheitsverbindungen i, die jeweils mit einem Ende einer vorangehenden Einheitsverbindung verbunden sind, wobei die Fahrzeugbewegungsrichtung festgelegt wird; und wobei die Krümmung unter Verwendung der folgenden Gleichung berechnet wird:

$$\text{Krümmungsradius } r1 = k \cdot \frac{L_A}{|\theta_A|}$$

wobei k einen konstanten Wert bezeichnet, $L_A$ eine Gesamtlänge jeder der Einheitsverbindungen $L_i$ bezeichnet, d.h. $L_A = \Sigma l_i$, und $\theta_A$ einen Gesamtschnittwinkel von jeder der Überschneidungswinkel $\theta_i$ bezeichnet, d.h. $\theta_A = \Sigma \theta_i$.

15. Verfahren nach einem der Ansprüche 10 bis 14, ferner umfassend ein Auswählen eines gespeicherten graphischen Zeichens aus einer Vielzahl von vorher gespeicherten Zeichen gemäß der berechneten Krümmung und der Krümmungsrichtung und Anzeigen des gewählten graphischen Zeichens.

**Revendications**

1. Appareil pour fournir des directives concernant les conditions routières, comprenant : des moyens pour détecter un tronçon unitaire de déplacement parmi une pluralité de tronçons unitaires dans des informations routières (13), sur lequel un véhicule se déplace ; et des moyens (14, 10-1) pour détecter une position instantanée du véhicule et une direction de déplacement dudit véhicule ; caractérisé en ce que l'appareil comprend en outre des moyens (10-3) pour calculer une distance entre la position instantanée du véhicule et une prochaine extrémité dudit tronçon unitaire de déplacement à partir de ladite position instantanée du véhicule et de ladite direction de déplacement ; des moyens (10-4) pour détecter un certain nombre de tronçons unitaires d'intersection connectés à la prochaine extrémité dudit tronçon unitaire de déplacement ; des moyens (16) pour calculer un angle d'intersection $\theta_1$ de ladite prochaine extrémité dudit tronçon unitaire de déplacement avec ledit tronçon unitaire d'intersection lorsque ledit nombre desdits tronçons unitaires d'intersection est un ; des moyens pour calculer une courbure à l'extrémité dudit tronçon unitaire de déplacement à partir de l'angle d'intersection $\theta_1$ et de la longueur $l_1$ du tronçon unitaire suivant connecté à l'extrémité du tronçon unitaire de déplacement ; et des moyens (17) pour afficher des informations concernant la courbure à l'intersection avec ledit tronçon.

2. Appareil selon la revendication 1, dans lequel les moyens pour calculer la courbure calculent la courbure en appliquant l'équation :

$$\text{rayon de courbure } r1 = k \cdot \frac{l_1}{|\theta_1|}$$

dans laquelle k désigne une valeur constante.

3. Appareil selon la revendication 1, dans lequel les moyens pour fournir des informations comprennent des moyens (16) pour afficher des informations concernant les conditions d'intersection dudit tronçon unitaire de déplacement avec lesdits tronçons d'intersection à leur intersection.

4. Appareil selon l'une quelconque des revendications précédentes, dans lequel les informations sont affichées sous forme d'une configuration graphique représentant les conditions de l'intersection.

5. Appareil selon l'une quelconque des revendications précédentes, comprenant en outre des moyens pour définir un degré de danger à partir des informations concernant la vitesse instantanée de déplacement du véhicule et l'angle d'intersection pour transmettre une alarme au conducteur.

6. Appareil selon la revendication 5, dans lequel les moyens pour transmettre une alarme génèrent une alarme sous la forme d'un écran graphique d'alarme et/ou d'une alarme audible.

7. Appareil selon l'une quelconque des revendications précédentes, dans lequel un train de tronçons unitaires de déplacement est défini par une pluralité de tronçons unitaires connectés en série à une extrémité d'un tronçon unitaire précédent en définissant la direction de déplacement du véhicule ; et dans lequel les moyens de calcul de la courbure calculent la courbure en utilisant l'équation :

$$\text{rayon de courbure } r1 = k \cdot \frac{L_A}{|\theta_A|}$$

dans laquelle k désigne une valeur constante, $L_A$ désigne une longueur totale de chacun des tronçons unitaires $L_i$, c'est-à-dire que $L_A = \Sigma l_i$ et $\theta_A$ désigne un angle total d'intersection de chacun des angles d'intersection $\theta_i$, c'est-à-dire que $\theta_A = \Sigma\theta_i$.

8. Appareil selon l'une quelconque des revendications précédentes, dans lequel le tronçon unitaire de déplacement est un tronçon d'un train de tronçons, l'appareil comprenant en outre :

des moyens pour détecter la position instantanée du véhicule et une direction de déplacement dudit véhicule sur ledit tronçon unitaire dudit train de tronçons ;
des moyens pour déterminer une position d'extrémité du dernier tronçon unitaire dudit train de tronçons placé en un emplacement situé à une distance prédéterminée γ en avant de ladite position instantanée du véhicule ;
des moyens pour détecter et calculer au moins un certain nombre de tronçons unitaires d'intersection connectés, un angle d'intersection formé, et une courbure d'au moins l'un desdits tronçons unitaires connectés à une extrémité de chacun desdits tronçons unitaires dudit train de tronçons de déplacement ;
des moyens pour afficher au moins une desdites informations concernant au moins l'un parmi le nombre des tronçons unitaires d'intersection connectés, un angle d'intersection formé entre ledit tronçon unitaire et un tronçon unitaire adjacent connecté, et une courbure d'un tronçon unitaire connecté à chacune des extrémités desdits tronçons unitaires dudit train de tronçons, respectivement, dans l'ordre où chacun desdits tronçons unitaires est agencé depuis ladite position instantanée du véhicule jusqu'à ladite position à ladite distance prédéterminée en avant de ladite position instantanée de ce véhicule.

9. Appareil selon l'une quelconque des revendications précédentes, dans lequel les informations concernant la courbure comprennent un signe graphique mémorisé qui est choisi parmi une pluralité de signes graphiques mémorisés selon la courbure et la direction de la courbe qui ont été calculées.

10. Procédé pour fournir des directives concernant les conditions routières, comprenant les étapes suivantes : détecter un tronçon unitaire de déplacement parmi une pluralité de tronçons unitaires dans des informations routières, sur lequel un véhicule se déplace ; et détecter une position instantanée du véhicule et une direction de déplacement dudit véhicule ; caractérisé en ce que le procédé comprend en outre les étapes suivantes :

calculer une distance entre la position instantanée du véhicule et une prochaine extrémité dudit tronçon unitaire d'après ladite position instantanée du véhicule et ladite direction de déplacement ;
détecter un certain nombre de tronçons unitaires d'intersection connectés à la prochaine extrémité dudit tronçon unitaire ;
calculer un angle d'intersection $\theta_1$ à ladite prochaine extrémité dudit tronçon unitaire avec lesdits tronçons unitaires d'intersection quand ledit nombre desdits tronçons unitaires d'intersection est un ; calculer une courbure à l'extrémité dudit tronçon unitaire de déplacement d'après l'angle d'intersection $\theta_1$ et d'après la longueur $l_1$ du tronçon unitaire suivant connecté à l'extrémité du tronçon unitaire de déplacement ; et
afficher des informations concernant la courbure à l'intersection desdits tronçons.

11. Procédé selon la revendication 10, lequel comprend en outre une étape pour définir un degré de danger à partir des informations concernant la vitesse instantanée de déplacement du véhicule et ledit angle d'intersection pour transmettre une alarme à un conducteur.

12. Procédé selon la revendication 10 ou 11, comprenant en outre les étapes suivantes :

détecter un certain nombre de tronçons d'intersection connectés à la prochaine extrémité dudit tronçon unitaire quand une distance entre la position instantanée du véhicule et une prochaine extrémité du tronçon unitaire de déplacement d'après la position instantanée du véhicule et la direction de déplacement descend au-dessous d'une distance prédéterminée $\ell_0$ ; et
afficher des informations indiquant la prochaine intersection en plus des informations concernant les conditions d'intersection dudit tronçon et desdits tronçons unitaires d'intersection à leur intersection, quand le nombre desdits tronçons unitaires d'intersection est supérieur à un.

13. Procédé selon l'une quelconque des revendications 10 ou 11, dans lequel la courbure est calculée en appliquant l'équation :

$$\text{rayon de courbure } r1 = k \cdot \frac{l_1}{|\theta_1|}$$

dans laquelle k désigne une valeur constante.

14. Procédé selon l'une quelconque des revendications 10 à 12, dans lequel un train de tronçons unitaires de déplacement est défini par une pluralité de tronçons unitaires i connectés chacun à une extrémité d'un tronçon unitaire précédent en définissant la direction de déplacement du véhicule ; et dans lequel la courbure est calculée en appliquant l'équation :

$$\text{rayon de courbure } r1 = k \cdot \frac{L_A}{|\theta_A|}$$

dans laquelle k désigne une valeur constante, $L_A$ désigne une longueur totale de chacun des tronçons unitaires $L_i$, c'est-à-dire que $L_A = \Sigma l_i$ et $\theta_A$ désigne un angle total d'intersection de chacun des angles d'intersection $\theta_i$, c'est-à-dire que $\theta_A = \Sigma \theta_i$.

15. Procédé selon l'une quelconque des revendications 10 à 14, comprenant en outre une étape qui consiste à sélectionner un signe graphique mémorisé parmi une pluralité de signes mémorisés à l'avance selon la courbure et la direction de la courbe qui ont été calculées, et à afficher le signe graphique sélectionné.

# Fig. 1

# Fig. 2

# Fig. 3

# Fig. 4

# Fig. 5

```
        ( START )
            │
            ▼
┌──────────────────────┐   STEP a
│ DETECT TRAVELING     │
│ LINK                 │
└──────────────────────┘
            │
            ▼
┌──────────────────────┐   STEP b
│ DETECT VEHICULAR     │
│ POSITION AND         │
│ TRAVELING DIRECTION  │
└──────────────────────┘
            │
            ▼
┌──────────────────────┐   STEP c
│ DERIVE $l$           │
└──────────────────────┘
            │
  STEP d    ▼
      ╱───────────────╲      NO
     ╱  $l \leq l_0$   ╲──────────────┐
     ╲      ?          ╱              │
      ╲───────────────╱               │
          │ YES                       │
          ▼                           │
┌──────────────────────┐   STEP e     │
│ DETECT  NUMBER  OF   │              │
│ CONNECTING  LINKS    │              │
└──────────────────────┘              │
            │                         │
            ▼            STEP f        │
      ╱───────────────╲               │
  NO ╱ CONNECTING LINKS=1╲            │
 ┌───╲                  ╱             │
 │    ╲      ?         ╱              │
 │     ╲─────────────╱               │
 │          │ YES                     │
 │          ▼                         │
 │  ┌──────────────────┐   STEP g     │
 │  │ CALCULATE        │              │
 │  │ INTERSECTING LINKS│             │
 │  │ ANGLE            │              │
 │  └──────────────────┘              │
 │          │                         │
STEP I      ▼                         │
┌────────┐ ┌──────────────────────┐ STEP h │
│DISPLAY │ │ DISPLAY INFORMATION FOR│    │
│INFORMA-│ │ FORTHCOMING CURVE     │    │
│TION    │ └──────────────────────┘    │
│FOR     │          │                  │
│FORTH-  │          │                  │
│COMING  │          │                  │
│INTER-  │          │                  │
│SECTION │          │                  │
└────────┘          │                  │
     │              ▼                  │
     └──────────────┴──────────────────┘
                    │
                    ▼
                ( E N D )
```

# Fig. 6

Fig. 7